# EUROPÄISCHE PATENTSCHRIFT

(11) **EP 1 314 164 B1**
(45) Veröffentlichungstag und Bekanntmachung des Hinweises auf die Patenterteilung: **06.05.2004**
(21) Anmeldenummer: 01962647.2
(22) Anmeldetag: 22.08.2001
(51) Int. Cl.: G11B 33/04

(54) **GEHÄUSE FÜR EINE OPTISCHE DISKETTE, INSBESONDERE CD-GEHÄUSE**
ENCLOSURE FOR AN OPTICAL DISC, IN PARTICULAR, A CD ENCLOSURE
BOITIER POUR DISQUE OPTIQUE, NOTAMMENT BOITIER DE DISQUE COMPACT (CD)

(30) Priorität: 25.08.2000 DE 10041828
(43) Veröffentlichungstag der Anmeldung: 28.05.2003
(73) Patentinhaber: Nacken, Robert, 50996 Köln (DE)
(72) Erfinder: Nacken, Robert, 50996 Köln (DE)
(74) Vertreter: Bauer, Wulf, Dr.
(86) Internationale Anmeldenummer: PCT/DE2001/003136
(87) Internationale Veröffentlichungsnummer: WO 2002/017321

(56) Entgegenhaltungen:
- WO-A-98/43247
- US-A- 5 746 314
- US-A- 5 878 879

## Beschreibung

Die Erfindung bezieht sich auf ein Gehäuse für eine optische Disk, insbesondere CD-Gehäuse, mit einer Hülle, die allseitig geschlossen ist mit Ausnahme einer Öffnung, die sich über eine Schmalseite erstreckt, und mit einer in der Hülle verschiebbaren und aus ihr entnehmbaren Schublade, die eine Front aufweist, welche im geschlossenen Zustand der Schublade die Öffnung verschliesst, und die eine Platte hat, welche eine Auflagefläche für eine CD ausbildet, aus der eine Halterung für die CD vorspringt und die im wesentlichen flach ist.

Das aus der DE 198 34 549 A vorbekannte CD-Gehäuse der eingangs genannten Art hat eine Hülle, in die eine Schublade eingeschoben werden kann, wie sie als Standard-CD-Träger allgemein bekannt ist. WO 98/43247 beschreibt ein Gehäuse, das als nächstliegender Stand der Technik angesehen wird. Ein weiterer flacher CD-Behälter ist aus der DE 42 21 127 C2 bekannt.

Bei dem vorbekannten CD-Gehäuse ist die Bedienung zwar dadurch erleichtert, dass die Schublade mit elastischem Druck ausgefahren wird, wenn sie einmal betätigt ist, die Entnahme einer CD und das Einlegen einer CD sind aber umständlich. Zudem ist das CD-Gehäuse relativ klobig, seine Abmessungen sind deutlich grösser als die eigentlichen Abmessungen der CD.

Unter einer optischen Disk werden Datenträger in Scheibenform mit Innenloch verstanden, die typischerweise einen Aussendurchmesser von 12 cm und eine typische Dicke von 1,2 mm haben. Die Daten sind digital aufgezeichnet und werden über einen Laser erfasst. Neben CDs gehören hierzu Super Audio Disks, DVDs und die entsprechenden Spezialausführungen, wie beispielsweise DVD-ROM, CD-ROM, CD-R, DVD-R usw.

Die Erfindung hat es sich zur Aufgabe gemacht, das CD-Gehäuse der eingangs genannten Art dahingehend weiterzuentwickeln, dass es bequemer und sicherer in der Anwendung ist, kleiner ist und auch gefälliger wird.

Ausgehend vom Gehäuse der eingangs genannten Art wird diese Aufgabe dadurch gelöst, dass hinter der Front eine längliche Tasche zwischen Front und Platte ausgebildet ist, die sich nahezu über die gesamte Länge der Front erstreckt und die von der Unterfläche der Platte zugänglich ist und dass die Front aus optisch durchsichtigem Material gefertigt ist. Das Gehäuse gemäß der Erfindung ist im Anspruch 1 definiert.

Bei diesem Gehäuse ist das Anbringen und Entfernen einer frontseitigen Auszeichnung und Beschriftung sehr einfach durchzuführen. Aufgrund der länglichen Tasche, die einen Folienstreifen, insbesondere einen Papierstreifen haltend aufnimmt, kann sowohl bei der Herstellung in einer automatisch arbeitenden Maschine beim Hersteller ein beschrifteter Folienstreifen in die Tasche eingelegt werden, aber auch ein Benutzer kann später ohne grosse Hilfsmittel die Beschreibung entnehmen und ändern. Dabei ist kein Klebstoff nötig, der Papierstreifen hält von selbst in der Tasche, die entsprechend bemessen ist.

Auf diese Weise können auch Strichcodes auf den Papierstreifen angebracht werden, was eine einfachere Zuordnung und Inventarisierung erleichtert. Nebeneinander oder übereinander gestapelte CD-Behälter müssen nun nicht mehr einzeln ergriffen werden, sondern sie können direkt mit einem Lesegerät im gestapelten Zustand erfasst werden. Dies bringt nicht nur dem Händler Vorteile, sondern auch dem privaten Anwender. Deutlich vereinfacht wird auch für Aufnahmedisks (recordables) die Auszeichnung Inhaltsangabe und Archivierung.

Es ist bequem und einfach durchführbar, dem Händler und/oder Anwender Folienstreifen zur Verfügung zu stellen, die man selbst beschriften kann. Da der Austausch bequem und einfach durchführbar ist, weiterhin keine Hilfsmittel dafür notwendig sind, ist eine Beschriftung der stets sichtbaren Frontseite bequem und einfach durchzuführen. Der Folienstreifen kann durch die Front hindurch bequem gelesen werden.

Das Lesen wird noch erheblich dadurch vereinfacht, wenn die Front in bevorzugter Ausführung eine Stablinse aufweist, deren Stabachse in Längsrichtung der Front verläuft. Diese Stablinse wirkt als Vergrösserungslinse, sie erleichtert das Erfassen einer Beschriftung des Folienstreifens. Zudem gibt die Stablinse aufgrund ihrer Rundung dem Behälter ein gefälliges Aussehen.

In einer weiteren, bevorzugten Ausbildung ist der Folienstreifen Teil eines Blattes, das sowohl die Unterfläche der Platte der Schublade überdeckt als auch die eingelegte CD auf der Auflagefläche. Dazu wird vorgeschlagen, dass der Folienstreifen Teilstück eines Blattes ist, das am Übergang der Tasche zur Unterfläche etwa rechtwinklig abgeknickt ist, die Unterfläche (mit einem hinteren Teilblatt) bedeckt und an einer hinteren Kante der Platte zurückgeknickt ist auf die Auflagefläche und diese einschliesslich der darauf befindlichen CD im (mit einem oberen Teilblatt) wesentlichen überdeckt. Der in der Tasche untergebrachte Folienstreifen dieses Blattes dient nun zusätzlich dazu, das gesamte Blatt zu positionieren. Insbesondere wird es in der Betätigungsrichtung der Schubladen positioniert. Eine weitere Positionierung erfolgt durch das Umlenken des Blattes an der hinteren Kante der Platte bzw. an der Abschlusswand der Schublade. Durch das obere Teilblatt wird die CD geschützt. Ohne dieses Teilblatt würde beim Herausziehen der Schublade eine Relativbewegung zwischen CD und Innenfläche der Hülle stattfinden.

Aufgrund des eingelegten Teilblattes findet die Relativbewegung zwischen der Aussenseite des Teilblattes und der benachbarten Innenwand der Hülle statt. Die CD bleibt also geschützt.

Zudem stellt das Blatt eine grossflächige Aufnahme für Informationen aller Art dar. Hier können, wie dies bei vorbekannten CD-Gehäusen der Fall ist, viele Informationen, auch Bilder, aufgebracht werden. Insgesamt sind somit die besonders wichtigen Informationen hinter der Front auf dem Folienstreifen untergebracht. Ausführliche Informationen findet man auf dem Blatt, das gegenüber dem Folienstreifen eine wesentlich grössere Fläche hat.

In einer bevorzugten Weiterbildung ist das obere Teilblatt, dass sich zwischen CD und Hülle befindet, so präpariert, insbesondere elastisch so vorbehandelt oder belastet, dass es sich von der CD wegbewegt, insbesondere abhebt, wenn die Schublade geöffnet wird. Dadurch wird der Zugang zur CD unmittelbar frei.

Eine bevorzugte Weiterbildung der Erfindung zeichnet sich dadurch aus, dass die Platte eine Eigensteifigkeit aufweist, die so bemessen ist, dass sie im praktischen Einsatz aus der Hülle und durch Betätigen der Front einund ausgeschoben werden kann, aber durch Fingerdruck so um eine Biegeachse, die parallel zur Längsrichtung der Front verläuft, biegsam ist, dass bei zumindest teilweise ausgezogener Schublade die Auflagefläche in Nähe der Front zumindest einige Millimeter Abstand von einer auf der Auflagefläche befindlichen CD hat, sodass deren Entnahme vereinfacht ist.

Diese Ausbildung hat im praktischen Betrieb enorme Vorteile. Die Schublade, insbesondere die Platte der Schublade, ist so ausreichend eigensteif ausgebildet, dass sie bequem betätigt werden kann, also sich gut ein- und ausfahren lässt, wenn man die Front betätigt. Damit wird die Funktion einer Schublade vollständig erfüllt. Die Front ist wie bei einer üblichen Schublade die Handhabe für die Betätigung der Schublade. Durch ein leichtes Herunterbiegen der Platte kommt diese zumindest in Nähe der Front von der eingelegten CD frei, die CD kommt dabei auch zumindest teilweise von Ihrer Halterung frei, sie kann leicht entnommen werden. Ebenso leicht kann sie eingeschoben werden. Dabei muss die Schublade nicht einmal vollständig geöffnet werden, es genügt ein Öffnen zu etwa 60 % bis 70 %. Im Zusammenhang mit der selbstständigen Bewegung des oberen Teilblattes kommt also die CD beim Herausziehen der Schublade in ihrem vorderen Teil frei, sie wird sichtbar und kann sehr einfach ergriffen werden. Eine derartig einfache Handhabbarkeit ist bei den vorbekannten CD-Gehäusen nicht zu finden.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die im folgenden näher erläutert werden. Dies erfolgt unter Bezugnahme auf die Zeichnung, in dieser Zeichnung zeigen:
Fig. 1: eine perspektivische Darstellung des CD-Gehäuses mit eingelegter CD, die Schublade ist vollständig herausgezogen,
Fig. 2: ein Schnittbild durch ein CD-Gehäuse ohne eingelegte CD mit einer Schnittebene, die bestimmt ist durch die Ausziehrichtung der Schublade und eine Achslinie einer eingelegten CD,
Fig. 3: den linken Endbereich von Fig. 2 in vergrösserter Darstellung,
Fig. 4: den rechten Endbereich von Fig. 2 in vergrösserter Darstellung,
Fig. 5: eine perspektivische Darstellung einer linken, hinteren Ecke der Schublade,
Fig. 6: ein Schnittbild entsprechend einer Schnittlinie wie Fig. 2 durch den vorderen Teil einer Hülle und den rückwärtigen Teil einer Schublade zur Erläuterung des Anschlages gegen Ausziehen,
Fig. 7: eine Darstellung Fig. 6, jedoch nunmehr mit verformter Platte der Schublade, zur Erläuterung des Überwindens der Ausziehsperre,
Fig. 8: eine Darstellung entsprechend Fig. 7 in einer Position der Schublade, in der die Auszugsperre überwunden ist,
Fig. 9: eine Draufsicht auf eine vordere Ecke des geschlossenen CD-Gehäuses,
Fig. 10: eine Seitenansicht mit Blick ähnlich Fig. 2, jedoch nun mit teilweise herausgezogener, schnittbildlich dargestellter Schublade und darauf befindlicher schnittbildlich dargestellter CD,
Fig. 11: einen Zuschnitt für die Herstellung einer Hülle in Falttechnik aus PVC-Folie,
Fig. 12: einen Zuschnitt für eine Schublade in Falttechnik, passend zur Hülle gemäss Fig. 11 und
Fig. 13: einen Zuschnitt für ein Blatt aus Papier zur Verwendung in beiden Ausführungsbeispielen.

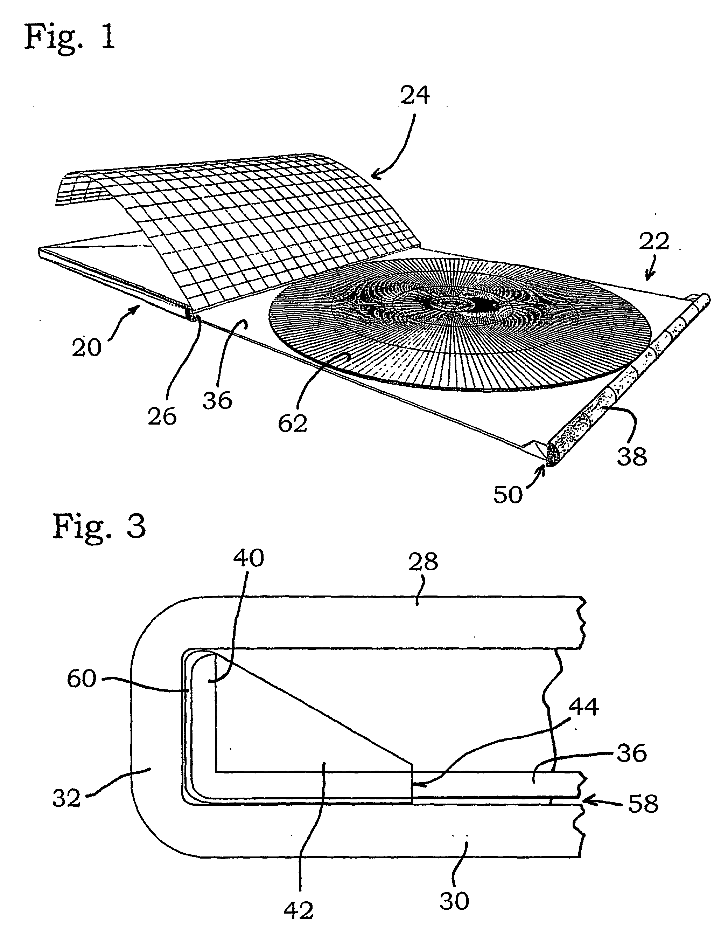

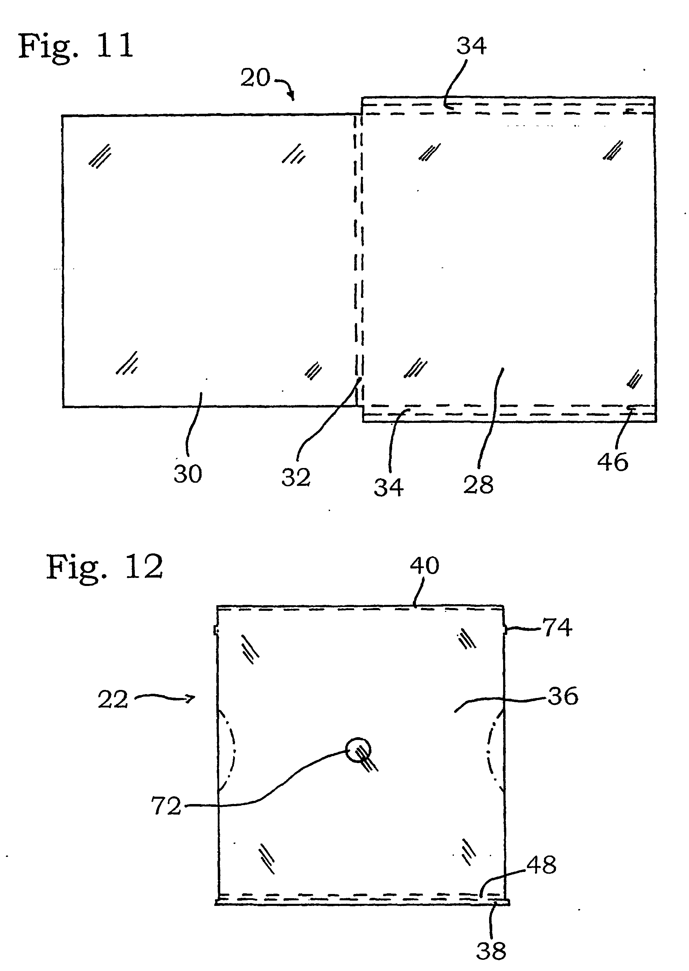

Die Figuren 1 bis 10 betreffen ein erstes Ausführungsbeispiel, die Figuren 11 und 12 ein zweites Ausführungsbeispiel. Das erste Ausführungsbeispiel lässt sich insbesondere in Spritzgusstechnik ausführen, es ist vorzugsweise aus vollständig transparentem Kunststoffmaterial hergestellt. Das zweite Ausführungsbeispiel wird aus dünner PVC-Folie erstellt, die beispielsweise 1 mm oder 0,5 mm dick ist, durch Falten und Kleben wird das CD-Gehäuse erstellt. Die Folie ist glasklar.

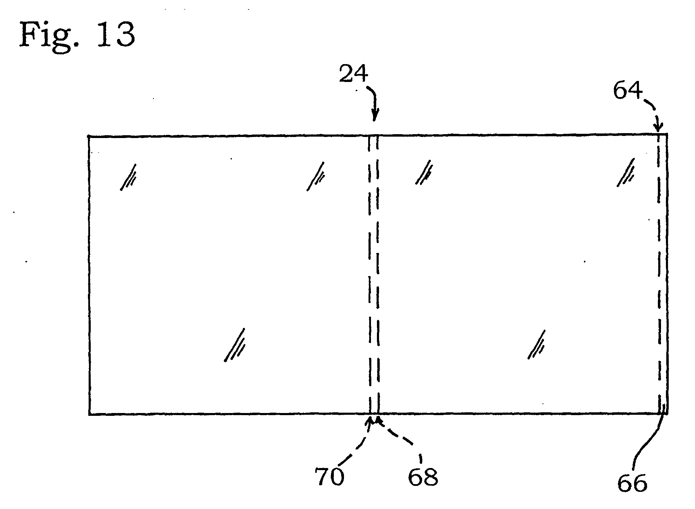

Wie alle Figuren zeigen, besteht das CD-Gehäuse im wesentlichen aus zwei Teilen, nämlich einer Hülle 20 und einer Schublade 22. Hinzu kommt noch ein Blatt 24, wie es aus Figur 13 im Zuschnitt ersichtlich ist und für beide Ausführungsbeispiele einsetzbar ist.

Die Hülle 20 ist ein flacher, hohler Quader mit im wesentlichen abgerundeten Ecken und Kanten, sie ist nur im Bereich einer Öffnung 26 zugänglich, diese Öffnung 26 gibt den gesamten Innenquerschnitt frei. Das Mass dieses Innenquerschnitts beträgt 3 mm in der Höhe und 122 mm in der Breite. Der Innenhohlraum ist 122 mm tief.

Die Hülle ist einstückig zusammengesetzt aus einer oberen Wand 28, einer unteren Wand 30, einer Rückwand 32 und zwei baugleichen Seitenwänden 34. Alle diese Teile 28 bis 34 haben eine Wandstärke von 1 mm. Dadurch betragen die Aussenabmessungen 5 mm in der Höhe, 124 mm in der Breite und 124 mm in der Tiefe. Der Übergang der oberen und unteren Wand 28, 30 in die Rückwand 32 ist abgerundet, wie insbesondere aus Fig. 3 hervorgeht. Auch alle anderen Kanten sind nicht scharf, wenn auch nicht so scharf abgerundet wie die beschriebenen Übergänge. Die untere Wand 30 steht geringfügig gegenüber der oberen Wand 28 und den Seitenwänden 34 vor, der Vorstand beträgt z. B. 0,5 mm bis 1 mm.

Die Schublade 22 besteht im wesentlichen aus einer Platte 36 und einer Front 38. Diese wird im gezeigten Ausführungsbeispiel durch eine Stablinse gebildet, die im Querschnitt die Form eines Kreissegmentes hat, das etwas kleiner ist als ein Halbkreis. Sie hat eine rückwärtige, ebene Fläche, die sich über die gesamte Höhe und die gesamte Breite erstreckt, also das Mass 5 x 124 mm aufweist. An ihren Längsenden ist die Stablinse abgerundet, um keine scharfe Kanten zu bilden.

Die Platte 36 ist aus 0,5 mm glasklarem Kunststoffmaterial gefertigt, es kann dasselbe Material wie für die Hülle 20 verwendet werden. Im rückwärtigen Bereich ist sie mit einer Abschlusswand 40 verbunden. Weiterhin sind in den hinteren Ecken baugleiche Führungsteile 42 angeordnet. Sie haben im wesentlichen das Innenmass der Hülle 20, wie auch aus Figur 3 ersichtlich ist. Die Abschlusswand 40 hat dagegen ein Untermass. Die Positionierung der Schublade 22 im hinteren Bereich erfolgt somit durch die beiden Führungsteile 42. Diese haben im wesentlichen eine Dreiecksform. Sie sind allerdings dort, wo sich der spitzeste Winkel befindet, abgestumpft. Dort wird eine Anschlagfläche 44 ausgebildet.

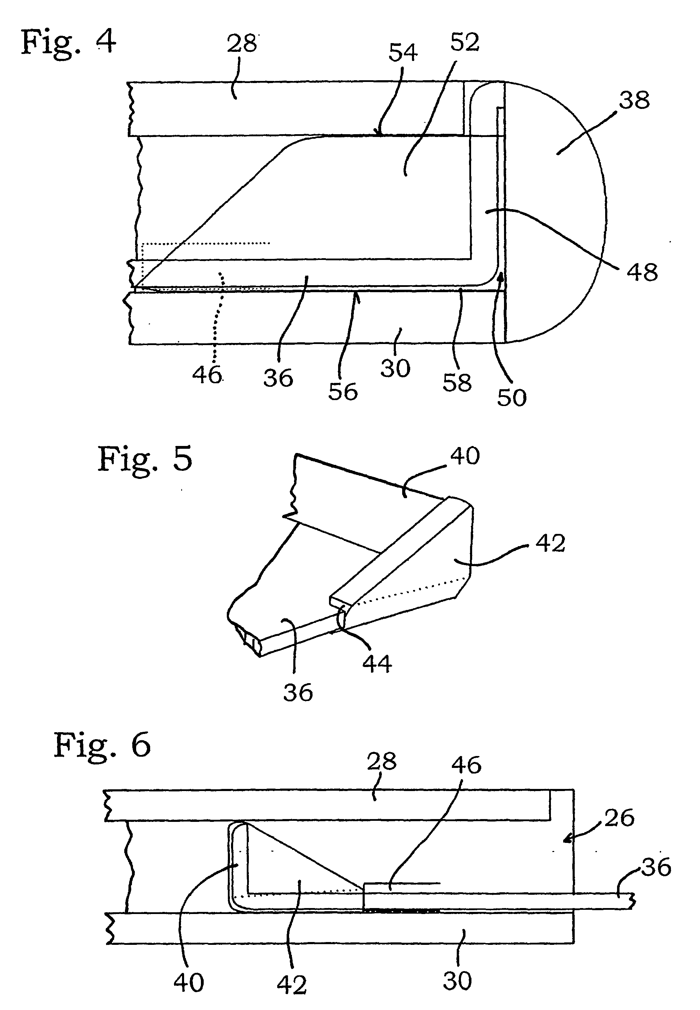

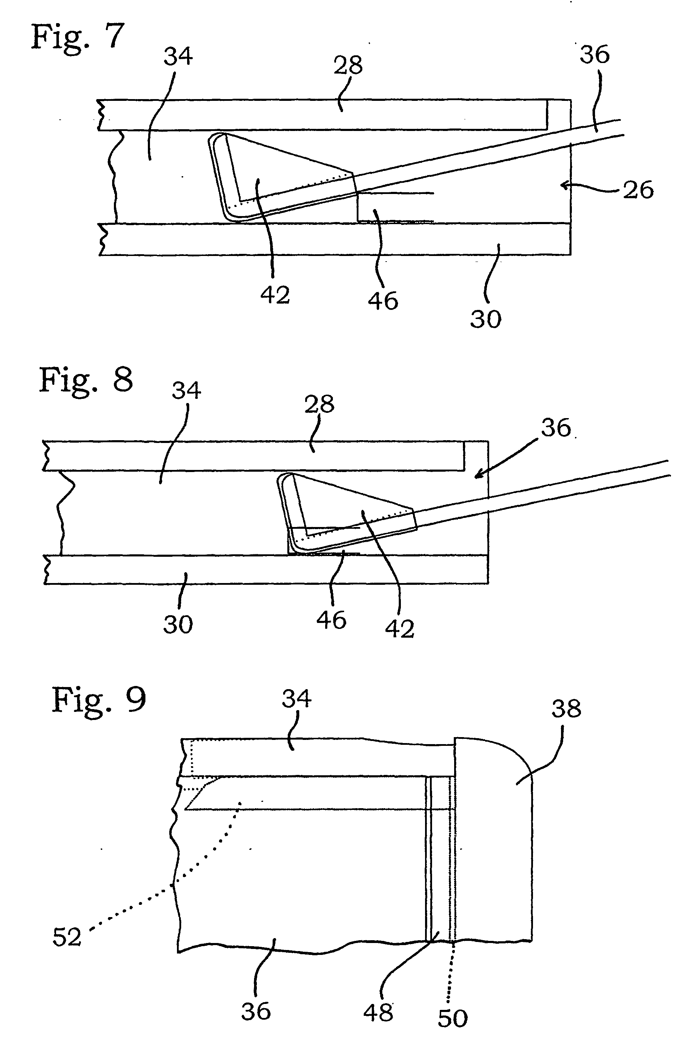

In den Seitenwänden 34 sind U-förmige Schnitte ausgeführt, durch die Zungen 46 definiert werden. Diese haben eine leichte Vorspannung nach innen, stehen also in den Innenhohlraum vor. Beim Herausziehen der Schublade schlagen die Anschlagflächen 44 an die freien Enden der Zungen an, dieser Zustand ist in Figur 6 darstellt. Die Zungen 46 erstrecken sich nur über ein Drittel der Höhe des freien Innenraums. Sie können überwunden werden, wie anhand der Figuren 7 und 8 dargestellt ist und im folgenden erläutert wird. Kippt man die Schublade 22 nach schräg oben, wie dies in Figur 7 dargestellt ist, kommen die Anschlagflächen 44 über die Zunge 46. Die Führungsteile 42 sind unten abgerundet oder abgeschrägt (siehe Fig. 5). In der in Figur 7 gezeigten Position befindet sich die obere linke Kante der Zunge 46 im Bereich dieser Abschrägung bzw. dieser Abrundung. Die Abschrägung bzw. Abrundung ist so stark, dass sie dem Mass entspricht, um dass die Zunge 46 nach innen vorspringt. Dadurch kann in der in Figur 7 gezeigten Position die Schublade 22 weiter nach aussen gezogen werden, die Zunge 46 bildet kein Hindernis. Vielmehr wird die Zunge 46 nach aussen gedrückt, wie dies im Zustand nach Figur 8 gegeben ist. In diesem Zustand gleitet der hintere Bereich der Schublade 22 an den Zungen 46 vorbei, die Schublade kann vollständig entnommen werden.

Beim Wiedereinsetzen der Schublade stören die Zungen 46 nicht, sie können beim Einschieben nach aussen gedrückt werden, sie bilden keinen Anschlag. Setzt man versehentlich die Schublade verkehrt herum ein, also im Gegensatz zu der Darstellung in den Figuren 6 bis 8 soll sich der Boden oben und das freie Ende der Abschlusswand 40 unten befinden, stören die Zungen 46 überhaupt nicht, dann liegt aber auch keine Auszugssperre vor. Man kann auch für diesen Fall eine Auszugssperre vorsehen, indem man entsprechend auch in Nachbarschaft der oberen Wand 28 Zungen 46 ausbildet. Diese können in der Tiefenrichtung versetzt sein, sodass ein anderer Anschlagpunkt vorliegt.

Im frontseitigen Bereich der Schublade ist die Platte 36 mit einem L-förmigen Steg 48 einstückig verbunden, der rechtwinklig zur Platte 36 steht. Er verläuft bis zur oberen Aussenkontur der Hülle 20 und geht dort einstückig über in die von der Stablinse gebildete Front 38. Dabei bleibt eine Tasche 50 zwischen der ebenen Rückfläche der Front 38 und dem Steg 48 frei. Diese Tasche ist etwa 3 mm tief und etwa einfache bis mehrfache Papierstärke breit. Der Übergang zwischen dem Steg 48 und der Unterfläche der Platte 36 ist gerundet. Von diesem Übergang aus ist die Tasche 50 zugänglich.

Im Übergangsbereich zwischen den Seitenflächen der Stege 48 und der Platte 36 ist an jeder vorderen Ecke der Platte 36 ein Passteil 52 vorgesehen. Es steift den Übergang zwischen Platte 36 und Steg 48 aus. Weiterhin hat es eine obere Anlagefläche 54 für die Anlage an der Innenseite der oberen Wand 28. Es hat zudem eine untere Anlagefläche 56 für die Anlage an der Innenseite der unteren Wand 30. Der Abstand zwischen den beiden Anlageflächen 54 und 56 beträgt etwa 3 mm und ist so gewählt, dass ein Klemmen auftritt. Durch diese Klemmung wird die Schublade 22 in der Hülle 20 gehalten. Zur Abschlusswand 40 hin sind die Passteile 52 abgeschrägt, wie insbesondere aus Figur 4 ersichtlich ist.

Aufgrund des Überstandes sowohl der Führungsteile 42 als auch der Passteile 52 nach unten, zur unteren Wand 30 hin, gegenüber der Platte 36 bleibt zwischen der Platte 36 und der Innenfläche der unteren Wand 30 ein flacher Innenbereich 58 frei. Er kommuniziert mit der Tasche 50.

Weiterhin ist aufgrund des beschriebenen Überstandes der Führungsteile 42 nach hinten, zur Rückwand 32 hin und bezogen auf die Abschlusswand 40 ein Freiraum 60 zwischen der Abschlusswand 40 und der Rückwand 32 gegeben. Die Abschlusswand 40 berührt nicht mit ihrer oberen, freien Kante die Innenfläche der oberen Wand 28, vielmehr bleibt auch dort ein Spalt frei. Auch oberhalb einer eingelegten CD 62 bleibt ein Raum frei bis nach vorn zum Steg 48 hin. Diese beschriebenen Innenräume, also beginnend mit der Tasche 50, dann Innenbereich 48, Freiraum 60 und Platz oberhalb der CD 62 werden genutzt, um das Blatt 24 einzulegen. Es hat einen rechteckförmigen Zuschnitt und drei Faltlinien. Die erste Faltlinie 64 trennt einen schmalen Streifen ab, er wird als Folienstreifen 66 bezeichnet. Zwischen der ersten Faltlinie und einer zweiten Faltlinie 68 befindet sich das Blatt 24 auf der Innenseite der unteren Wand 30, es kann hier grossflächig bedruckt werden. Ein schmaler Streifen zwischen der zweiten Faltlinie 68 und einer dritten Faltlinie 70 ist durch die transparente Rückwand 32 sichtbar. Der Rest des Blattes 24, also der Bereich über die dritte Faltlinie 70 hinaus, befindet sich oberhalb der CD 62 und ist durch die obere Wand 28 hindurch sichtbar. Die Tasche 50 ist so ausgebildet, dass sie den Folienstreifen 66 passend, mit leichtester Klemmung aufnimmt.

In ihrer Mitte hat die Platte 36 eine Halterung 72 für die CD 62. Die CD wird in dieser Halterung 72 nun locker positioniert, also nicht fixiert, insbesondere nicht festgeklemmt. Sie kann sehr leicht aus der Halterung 72 nach oben entnommen werden. Die Halterung 72 ist ein etwa zylindrischer Vorsprung, der locker in das zentrale Loch einer CD eingreift. Die Höhe der Halterung 72 ist so bemessen, dass noch ausreichend Platz für das Blatt bleibt, es wird insoweit auf Figur 2 verwiesen. Die Halterung ist aus dem Material der Platte 36 herausgeformt.

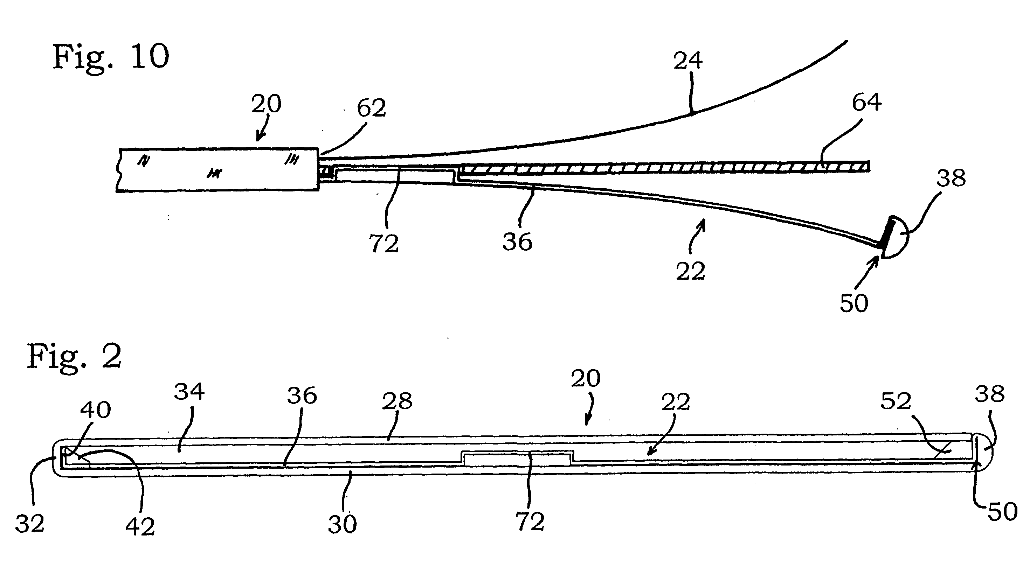

Figur 10 zeigt den etwas mehr als halb geöffneten Zustand des CD-Gehäuses. Die Platte 36 ist zwar so ausreichend starr, dass die Funktion der Schublade vollständig erfüllt ist, sie ist aber wiederum auch so nachgiebig, dass sie leicht per Hand gebogen werden kann. Sie hat eine typische Steifigkeit einer 0,5 mm PVC-Folie, entsprechend der Steifigkeit eines dünnen Kartons oder starken Papiers von beispielsweise 400 Gramm pro cm². Dadurch kann die Platte 36 gebogen werden, wie dies ersichtlich ist. Zur Biegung genügt ein Druck mit dem Finger. Auf diese Weise wird die CD 62 sehr einfach zugänglich, sowohl für das Einlegen als auch für das Entnehmen.

Die weitgehend freie Biegsamkeit der Schublade wird dadurch erreicht, dass die Schublade 22 keine seitliche Verstärkung hat. Über den grössten Teil der Tiefe der Schublade wird sie nur durch die Platte 36 gebildet, die bis auf die ausgeprägte Halterung 72 völlig flach ist. Dadurch wird einer Biegung nach unten, wie sie für das Freikommen der CD erwünscht ist, nur sehr geringer Widerstand entgegengesetzt.

Um die CD 62 auch auf ihrer Oberseite frei zugänglich zu machen, ist das Teilstück des Blattes 24, das die CD abdeckt, so vorbehandelt, elastisch vorbelastet oder anderweitig vorbereitet, dass es sich leicht nach oben wellt, wenn die Schublade 22 aufgezogen wird, ohne aber in irgendeiner Form beim Einschiebvorgang zu stören oder zu hindern, siehe Fig. 10.

Die Platte 36 bildet an ihrer der oberen Wand 38 zugewandten Oberseite eine Auflagefläche für die CD 62 aus. Es ist vorteilhaft, die Platte quer zur Halterung 72 gesehen mit etwas geringerer Breite auszuführen, damit dort die CD 62 übersteht und auch dadurch das Ergreifen der CD 62 erleichtert wird. In Fig. 12 sind stichpunktiert Ausnehmung dargestellt.

Im zweiten Ausführungsbeispiel nach den Figuren 11 und 12 sind die Zuschnitte für die Hülle 20 und die Schublade 22 angegeben. Diese Zuschnitte sind nur beispielhaft. Sie werden erstellt aus 0,5 mm starker Hart-PVC-Folie, die glasklar ist. Die Abmessungen sind mit möglichst grosser Treue so gewählt, dass sie zueinander und auch zur Darstellung des Blattes gemäss Figur 13 passen.

Der Zuschnitt gemäss Figur 11 für die Hülle wird entlang der gestrichelt gezeigten Knicklinien jeweils um 90° aus der Zeichenebene nach oben abgewinkelt. An den beiden Seitenwänden 34 stehen jeweils noch Klebelaschen vor, die an die entsprechende Gegenfläche der unteren Wand 30 geklebt werden. Auf diese Weise kommt ein quaderförmiger Körper zustande, der entlang einer Schmalseite, wo sich eine Öffnung 26 befindet, offen ist.

Figur 12 zeigt den Zuschnitt für eine Schublade 22. Der grösste Bereich, also das grösste Feld, wird durch die Platte 36 eingenommen. An ihrem oberen Rand ist über eine Faltlinie die Abschlusswand 40 vorgesehen. Links und rechts, etwas unterhalb von dieser, finden sich Vorsprünge 74 für eine Auszugsperre, die mit Zungen 46 in den Seitenwänden 34 zusammenwirken. Am unteren Rand ist der Steg 48 erkennbar, der aus der Papierebene nach oben gefaltet wird. Anschliessend daran findet man die Front 38, die etwas grössere Breite als der Steg 48 und die Platte 36 hat. An der Faltlinie zwischen Steg 48 und Front 38 wird um 180° gefaltet.

## Patentansprüche

1. Gehäuse für eine optische Disk, insbesondere CD-Gehäuse, mit einer Hülle (20), die allseitig geschlossen ist mit Ausnahme einer Öffnung (26), die sich über eine Schmalseite erstreckt, und mit einer in der Hülle (20) verschiebbaren und aus ihr entnehmbaren Schublade (22), die eine Front (38) aufweist, welche im geschlossenen Zustand der Schublade (22) die Öffnung (26) verschliesst, und die eine Platte (36) hat, welche eine Auflagefläche für eine CD (62) ausbildet, aus der eine Halterung (72) für die CD (62) vorspringt und die im wesentlichen flach ist, wobei hinter der Front (38) eine längliche Tasche (50) zwischen Front (38) und Platte (36) ausgebildet ist, die sich nahezu über die gesamte Länge der Front (38) erstreckt, die von der Unterfläche der Platte (36) zugänglich ist, und die einen Folienstreifen (66) aufnimmt, **dadurch gekennzeichnet, dass** die Front (38) aus optisch durchsichtigem Material gefertigt ist und dass der Folienstreifen (66) Teilstück eines Blattes (24) ist, das am Übergang der Tasche (50) zur Unterfläche etwa rechtwinklig abgewinkelt ist und die Unterfläche bedeckt.

2. Gehäuse nach Anspruch 1, **dadurch gekennzeichnet, dass** der Folienstreifen (66), ein Papierfolienstreifen (66) ist.

3. Gehäuse nach Anspruch 2, **dadurch gekennzeichnet, dass** das Blattes (24) an einer hinteren Abschlusswand (40) zurückgeknickt ist auf die Auflagefläche und diese einschliesslich einer darauf befindlichen CD (62) im wesentlichen überdeckt.

4. Gehäuse nach Anspruch 3, **dadurch gekennzeichnet, dass** der die Auflagefläche überdeckende Teil des Blattes (24) so vorbelastet ist, insbesondere elastisch vorbelastet ist, dass sein freies vorderes Ende beim Herausziehen der Schublade (22) aus der Hülle (20) sich von der CD (62) abhebt.

5. Gehäuse nach Anspruch 1, **dadurch gekennzeichnet, dass** die Front (38) eine Stablinse aufweist, deren Stabachse in Längsrichtung der Front (38) verläuft.

6. Gehäuse nach Anspruch 1, **dadurch gekennzeichnet, dass** Hülle (20) und Schublade (22) Rückhaltemittel aufweisen, die ein vollständiges Herausziehen der Schublade (22) aus der Öffnung (26) verhindern, die aber überwindbar sind, insbesondere dadurch überwindbar sind, dass die Platte (36) der Schublade (22) stark nach unten, von der CD (62) weggebogen oder in eine Schrägstellung gebracht wird.

7. Gehäuse nach Anspruch 1, **dadurch gekennzeichnet, dass** Hülle (20) und Schublade (22) Passmittel aufweisen, die im geschlossenen Zustand der Schublade (22) in der Hülle (20) die Schublade (22) positionieren und kraftschlüssig halten, insbesondere klemmen.

8. Gehäuse nach Anspruch 1, **dadurch gekennzeichnet, dass** sich die Tasche (50) über mehr als die halbe Höhe der Front (38) erstreckt.

9. Gehäuse nach Anspruch 1, **dadurch gekennzeichnet, dass** die Platte (36) über einen Steg (48), der quer zur Platte (36) verläuft, mit der Front (38) verbunden ist, insbesondere dass Steg (48) und Platte (36) einstückig miteinander verbunden sind.

10. Gehäuse nach Anspruch 1, **dadurch gekennzeichnet, dass** die Platte (36) eine Eigensteifigkeit aufweist, die so bemessen ist, dass sie im praktischen Einsatz aus der Hülle (20) und durch Betätigen der Front (38) einund ausgeschoben werden kann, aber durch Fingerdruck so um eine Biegeachse, die parallel zur Längsrichtung der Front (38) verläuft, biegsam ist, dass bei zumindest teilweise ausgezogener Schublade (22) die Auflagefläche in Nähe der Front (38) zumindest einige Millimeter Abstand von einer auf der Auflagefläche befindlichen CD (62) hat, sodass deren Entnahme vereinfacht ist.

## Claims

1. Housing for an optical disc, specifically a CD housing, with a case (20), which is closed all around with the exception of an opening (26), which extends across a narrow side, and with a drawer (22) which is moveable in the case (20) and removable therefrom, which drawer (22) has a front (38), which in the closed position of the drawer (22) closes the opening (26), and which drawer (22) has a tray (36) which has a holding surface for the CD (62) and a protruding holder (72) for the CD (62) which tray (36) is mainly flat, a lengthy pocket (50) is formed behind the front (38) and between the front (38) and the tray (36) which pocket (50) extends over almost the entire length of the front (38) and is accessible from a bottom face of the tray (36) and receives a foil strip (66), **characterized in that** the front (38) is manufactured out of an optically transparent material, and that the foil strip (66) is a part of a sheet (24) which is folded downwards at an approximately right angle at the transition of the pocket (50) towards the bottom face and covers the bottom face.

2. Housing according to claim 1, **characterized in that** the foil strip (66) is a paper foil strip (66).

3. Housing according to claim 2, **characterized in that** the sheet (24) is folded back to the holding surface at the rear closing panel (40) and that it covers the holding surface and a CD (62) resting thereon.

4. Housing according to claim 3 **characterized in that** the part of the sheet (24) which covers the holding surface is biased, especially elastically prestressed, that a free front end thereof swings upwards from the CD (62) when the drawer (22) is pulled out of the case (20).

5. Housing according to claim 1, **characterized in that** the front (38) comprises a magnifying lens having the form of a bar and a bar axis running along the length of the front (38).

6. Housing according to claim 1, **characterized in that** the case (20) and the drawer (22) have backholding means which hinder a complete removal of the drawer (22) from the opening (26) but which can be overcome, specifically can be overcome by bending the tray (36) of the drawer (22) positively downwards away from the CD (62) or by bringing it into a slanted position.

7. Housing according to claim 1, **characterized in that** the case (20) and the drawer (22) have fitting pieces which ensure that the drawer (22) in a closed position is positioned within the case (20) so that the drawer (22) is held tightly and specifically clamps.

8. Housing according to claim 1, **characterized in that** the pocket (50) extends over more than half of the height of the front (38).

9. Housing according to claim 1, **characterized in that** a stem (48) connects the tray (36) with the front (38) which stem (48) runs oblique to the tray (36), specifically **in that** the stem (48) and the tray (36) are connected in one piece with each other.

10. Housing according to claim 1, **characterized by** the fact that the tray (36) has a material stiffness which is chosen so that in practical handling and usage the tray (36) can be pushed in and pulled out of the case (20) by grasping the front (38), and the tray (36) can be bent down with a pressure of a finger and along a bending axis which runs parallel to the front (38) sufficiently, so that in a situation of an at least partially pulled out drawer (22) the holding surface has a free space of several millimeters from a CD (62) which is on this holding surface, to facilitate a removal of the CD (62).

## Revendications

1. Boîtier pour un disque optique, spécifiquement un boîtier de CD, avec une enveloppe (20), qui est fermée tout autour excepté une ouverture (26) s'étendant à travers un côté étroit, et avec un tiroir (22), qui est mobile dans l'enveloppe (20) et qui peut être enlevé de là, le tiroir (22) ayant une face avant (38), qui en position fermée du tiroir (22) obture l'ouverture (26), et un plateau (36), qui forme une surface de réception pour le CD (62), un support saillant (72) pour le CD (62) faisant saillie de ce plateau (36), cette surface de réception est principalement plat, une poche prolongée (50) est formée derrière la face avant (38) et entre la face avant (38) et le plateau (36), s'étend sur presque la longueur entière de la face avant (38), est accessible de la surface inférieure du plateau (36) et reçoit une bande de feuille (66), **caractérisée en ce que** la face avant (38) est manufacturé d'un matériel optiquement transparent, et **en ce que** la bande de feuille (66) est une partie d'une feuille (24), qui est pliée à un angle à peu près droit à la transition de la poche (50) à la surface inférieure et couvre la surface inférieure.

2. Boîtier selon la revendication 1, **caractérisée en ce que** la bande de feuille (66) est une bande de feuille en papier (66).

3. Boîtier selon la revendication 2, **caractérisé en ce que** la feuille (24) est repliée à un panneau d'obturation arrière (40) sur la surface de réception et couvre essentiellement la surface de réception et un CD (62) se reposant là-dessus.

4. Boîtier selon la revendication 3, **caractérisé en ce que** la partie de la feuille (24), qui couvre la surface de réception, est précontrainte, spécialement élastiquement chargée, qu'un embout avant libre balance vers le haut en s'éloignant du CD (62) quand le tiroir (22) est retiré de l'enveloppe.

5. Boîtier selon la revendication 1, **caractérisée en ce que** la face avant (38) comporte une lentille magnifiante en forme d'une barre, ayant un axe de barre qui s'étend sensiblement sur la longueur da la face avant (38).

6. Boîtier selon la revendication 1, **caractérisée en ce que** l'enveloppe (20) et le tiroir (22) ont un dispositif de retenue, qui empêche un déplacement complet du tiroir (22) de l'ouverture (26), mais qui peut être surmontée, spécifiquement peut être surmonté en pliant le plateau (36) du tiroir (22) profondément en bas en s'éloignant du CD (62) ou en l'introduisant dans une position inclinée.

7. Boîtier selon la revendication 1, **caractérisée en ce que** l'enveloppe (20) et le tiroir (22) ont des moyen d'ajustage qui positionnent le tiroir (22) en position fermée dans l'enveloppe (20) et le retenant par adhérence, spécifiquement en le serrant.

8. Boîtier selon la revendication 1, **caractérisée en ce que** la poche (50) s'étend sur plus que la moitié de l'hauteur de la face avant (38).

9. Boitier selon la revendication 1, **caractérisée en ce qu'**une tige (48) relie le plateau (36) à la face avant (38), cette tige s'étendant à travers de ce plateau (36), spécifiquement **en ce que** la tige (48) et le plateau (36) sont réalisés dans une seule pièce.

10. Boîtier selon la revendication 1, **caractérisée en ce que** le plateau (36) a une rigidité matérielle qui est choisie de sorte que dans la manipulation et l'utilisation pratiques le plateau (36) puisse être enfoncé et retiré de l'enveloppe (20) en manipulant la face avant (38), et le plateau (36) peut être plié vers le bas avec de la pression d'un doigt le long d'un axe de recourbement, qui est parallèle à la direction de longueur de la face avant (38), de sorte que dans une situation d'un tiroir au moins partiellement retiré (22) à proximité de la face avant la surface de réception se trouve à une distance libre de plusieurs millimètres d'un CD (62), qui est sur cette surface de réception, pour faciliter l'enlèvement du CD (62).
